# EUROPEAN PATENT APPLICATION

(11) **EP 4 571 932 A1**
(43) Date of publication of application: **18.06.2025**
(21) Application number: 22957753.1
(22) Date of filing: 08.09.2022
(51) Int. Cl.: H01M 10/44, H02M 3/156, H02M 3/158, H02M 1/32

(54) **CONVERTER PARAMETER DETERMINATION METHOD, CONTROL METHOD, COMPUTING DEVICE AND STORAGE MEDIUM**

(71) Applicant: Siemens Aktiengesellschaft, 80333 München (DE)
(72) Inventor: ZHAO, Yanfeng, Beijing 100102 (CN); LEI, Yuzhou, Beijing 100076 (CN); WANG, Huijin, Beijing 102600 (CN)
(74) Representative: Isarpatent
(86) International application number: PCT/CN2022/117909
(87) International publication number: WO 2024/050781

(57) **Abstract**

The present invention relates to a converter parameter determination method, a control method, a computing device and a storage medium. The parameter determination method comprises: setting an AC/DC output voltage to the minimum value within a preset range; executing a power loss calculation operation, comprising: causing an output voltage of a DC/DC module to reach a preset DC output voltage by means of changing a switching frequency of the DC/DC module; calculating the power loss of a converter on the basis of an input power of an AC/DC module and an output power of the DC/DC module; recording current operating parameters, the operating parameters comprising the AC/DC output voltage, a DC output current of the DC/DC module, the DC output voltage, the switching frequency and the power loss; increasing the AC/DC output voltage and repeating the power loss calculation operation, until the AC/DC output voltage reaches the maximum value in the preset range; comparing all the recorded power losses, and setting the AC/DC output voltage and the switching frequency corresponding to a minimum power loss as optimized operating parameters under the preset DC output voltage operating condition.

## Description

### Technical Field

The present disclosure generally relates to the technical field of circuits, and more specifically to a parameter determination method and control method for a converter, a computing device, and a storage medium.

### Background Art

AC/DC and DC/DC converters are widely used in many fields, such as electric vehicle charging, power supply for 5G base stations, photovoltaic inverters, energy storage converters, etc. With the development of science and technology, people are paying more and more attention to energy conversion efficiency. To achieve high conversion efficiency, low-power-loss power switches such as SIC elements or GAN elements can usually be used, all of which have the characteristics of low conduction efficiency and low switching loss. At the same time, some key technologies such as soft switching technology and synchronous rectification technology are used in actual products. With these new solutions, the conversion efficiency of the system can be improved.

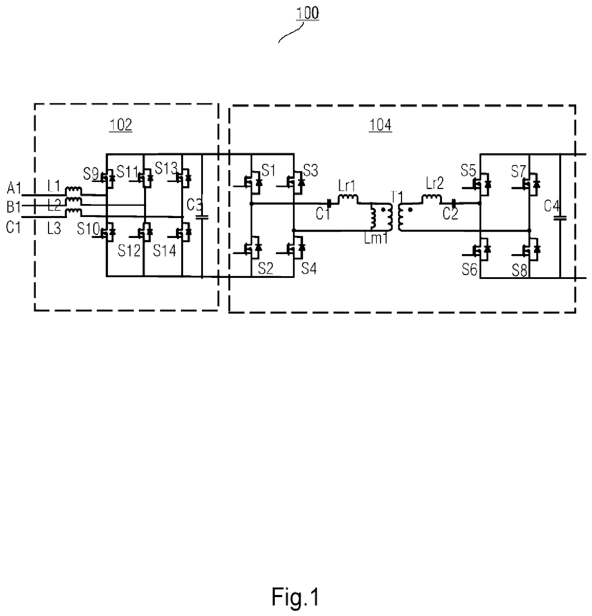

Fig. 1 shows a typical topology of an AC/DC-DC/DC converter 100. In the AC/DC part 102, a two-level topology is used; and in the DC/DC part 104, a CLLLC topology is used.

Typically, the converter shown in Fig. 1 will have a wide input and output voltage range and load variation, whereas the output voltage on the AC/DC side is fixed. When the output voltage of the DC/DC part needs to be changed, it may be achieved by changing the switching frequency. System losses mainly include switching losses and conduction losses of all switches, transformer losses, and other losses such as line losses. For high-frequency applications, especially under high load conditions, transformer losses and line losses cannot be ignored. Therefore, how to achieve higher efficiency becomes more important.

At present, no effective solution has been found to improve the efficiency. Only in some special cases, such as under over-resonant frequency, the switching loss will increase significantly. Therefore, to avoid operating in the over-resonant frequency range, the input voltage is controlled at a lower level. This solution can reduce the loss of over-resonant applications. However, this is not the best way. When the switching frequency is reduced, the switching loss may be reduced, but the conduction loss may be increased and the transformer loss may also be increased. When the converter operates under under-resonance (switching frequency < resonant frequency) conditions, during the time difference between the switching frequency and the resonant frequency in one cycle, no energy is moved from the primary side to the secondary side, and this part of the current will still flow through the switch and the transformer on the primary side. In this case, the conduction loss of the switch and the transformer loss will increase additionally. Therefore, the optimal energy efficiency cannot be obtained in this solution.

### Summary of the Invention

A brief summary of the present invention will be given below, so as to provide a basic understanding of certain aspects of the present invention. It should be understood that this summary is not an exhaustive summary of the present invention. It is not intended to determine key or important parts of the present invention, nor is it intended to limit the scope of the present invention. Its purpose is merely to give certain concepts in a simplified form as a prelude to a more detailed description discussed later.

In view of this, the present disclosure proposes a solution for AC/DC-DC/DC converters so that the optimal energy efficiency can be obtained.

According to one aspect of the present disclosure, a method for determining optimal operating parameters of a converter is provided, wherein the converter comprises an AC/DC module and a DC/DC module, and an AC/DC output voltage of the AC/DC module has a predetermined range, the method comprising:
setting the AC/DC output voltage to a minimum value within the predetermined range;
performing a power loss calculation operation, the power loss calculation operation comprising:
   causing an output voltage of the DC/DC module to reach a predetermined DC output voltage by changing a switching frequency of the DC/DC module;
   calculating a power loss of the converter based on an input power of the AC/DC module and an output power of the DC/DC module; and
   recording current operating parameters, the operating parameters comprising an AC/DC output voltage, a DC output current, DC output voltage and switching frequency of the DC/DC module, and a power loss;
   increasing the AC/DC output voltage, and repeatedly performing the power loss calculation operation until the AC/DC output voltage reaches a maximum value within the predetermined range; and
   comparing all recorded power losses, and using the AC/DC output voltage and the switching frequency corresponding to the power loss with a minimum value as the optimal operating parameters under the condition of the predetermined DC output voltage.

Optionally, in an example of the above aspect, the method further comprises storing, as empirical data, the AC/DC output voltage and the switching frequency, DC output voltage and DC output current of the DC/DC module corresponding to the power loss with the minimum value.

Optionally, in an example of the above aspect, calculating the power loss of the converter based on the input power of the AC/DC module and the output power of the DC/DC module comprises:
measuring an input current and an input voltage of the AC/DC module to calculate the input power of the AC/DC module;
measuring an output current and an output voltage of the DC/DC module to calculate the output power of the DC/DC module; and
obtaining the power loss by subtracting the output power from the input power.

According to another aspect of the present disclosure, a method for controlling a converter is provided, wherein the converter comprises an AC/DC module and a DC/DC module, the method comprising:
monitoring a DC output voltage and a DC output current of the DC/DC module of the converter;
determining whether the DC output voltage or the DC output current is changed; if not, going back to the previous step, and if so, executing the next step;
querying whether corresponding empirical data is stored for the current DC output voltage and DC output current, wherein the empirical data comprises the DC output voltage, the DC output current, the corresponding AC/DC output voltage of the AC/DC module, and the corresponding switching frequency of the DC/DC module;
if the corresponding empirical data is stored, controlling the converter by using the AC/DC output voltage and the switching frequency in the empirical data; and
if the corresponding empirical data is not stored, determining an AC/DC output voltage and a switching frequency corresponding to the current DC output voltage and DC output current by using the method described in any one of claims 1-3, and controlling the converter by using the determined AC/DC output voltage and switching frequency.

According to another aspect of the present disclosure, an apparatus for determining optimal operating parameters of a converter is provided, wherein the converter comprises an AC/DC module and a DC/DC module, and an AC/DC output voltage of the AC/DC module has a predetermined range, the apparatus comprising:
an initial voltage setting unit, configured to set the AC/DC output voltage to a minimum value within the predetermined range;
a power loss calculation unit, configured to perform the following power loss calculation operation:
   causing an output voltage of the DC/DC module to reach a predetermined DC output voltage by changing a switching frequency of the DC/DC module; and
   calculating a power loss of the converter based on an input power of the AC/DC module and an output power of the DC/DC module; and
   recording current operating parameters, the operating parameters comprising an AC/DC output voltage, an output current and a switching frequency of the DC/DC module, and a power loss;
   a repetitive control unit, configured to increase the AC/DC output voltage and to control the power loss calculation unit to perform the operation until the AC/DC output voltage reaches a maximum value within the predetermined range; and
   an optimal parameter determination unit, configured to compare all recorded power losses and to use the AC/DC output voltage and the switching frequency corresponding to the power loss with a minimum value as the optimal operating parameters under the condition of the predetermined DC output voltage.

According to another aspect of the present disclosure, a control apparatus for a converter is provided, wherein the converter comprises an AC/DC module and a DC/DC module, the control apparatus comprising:
a monitoring unit, configured to monitor a DC output voltage and a DC output current of the DC/DC module of the converter;
a first determination unit, configured to determine whether the DC output voltage or the DC output current is changed;
a second determination unit, configured to, in a case where the DC output voltage or the DC output current is changed, query whether corresponding empirical data is stored for the current DC output voltage and DC output current, wherein the empirical data comprises the DC output voltage, the DC output current, the corresponding AC/DC output voltage of the AC/DC module, and the corresponding switching frequency of the DC/DC module;
a first control unit, configured to, in a case where the corresponding empirical data is stored, control the converter using the AC/DC output voltage and switching frequency in the empirical data;
a second control unit, configured to, in a case where the corresponding empirical data is not stored, determine an AC/DC output voltage and a switching frequency corresponding to the current DC output voltage and DC output current by using the apparatus for determining the optimal operating parameters of the converter described in any one of claims 6-8, and control the converter by using the determined AC/DC output voltage and switching frequency.

According to another aspect of the present disclosure, a computing device is provided, the computing device comprising: at least one processor; and a memory coupled to the at least one processor, wherein the memory is used to store instructions, which, when executed by the at least one processor, cause the processor to perform the method described above.

According to another aspect of the present disclosure, a non-transitory machine-readable storage medium is provided, the storage medium having executable instructions stored thereon, which, when executed, cause the machine to perform the method described above.

According to another aspect of the present disclosure, a computer program is provided, the computer program comprising computer-executable instructions, which, when executed, cause at least one processor to perform the method described above.

According to another aspect of the present disclosure, a computer program product is provided, the computer program product being tangibly stored on a computer-readable medium and comprising computer-executable instructions, which, when executed, cause at least one processor to perform the method described above.

According to the method for determining the optimal operating parameters of the converter and the control method for the converter of the present disclosure, the optimal operating parameters of the converter are found, and the converter is controlled to operate according to the optimal operating parameters, so that the optimal energy efficiency of the converter can be achieved. In addition, in the method of the present disclosure, the optimal operating parameters found each time are stored as empirical data in a database. Therefore, the database can be dynamically updated, so that other converters can directly use the empirical data in the database through the network without the need for an additional search process. The method according to the present disclosure is simple and easy to implement without the need for any change of the hardware.

### Brief Description of the Drawings

The above and other objectives, features and advantages of the present invention will be more easily understood with reference to the following description of the embodiments of the present invention in conjunction with the accompanying drawings. The components in the accompanying drawings are only for illustrating the principles of the present invention. In the accompanying drawings, the same or similar technical features or components will be denoted by the same or similar reference numerals. In the accompanying drawings:
Fig. 1 is a typical topological diagram of an AC/DC-DC/DC converter.
Fig. 2 is a flow chart of an exemplary process of a method for determining optimal operating parameters of a converter according to an embodiment of the present disclosure.
Fig. 3 is a flowchart of an exemplary process of a method for controlling a converter according to an embodiment of the present disclosure.
Fig. 4 is a block diagram of an exemplary configuration of an apparatus for determining optimal operating parameters of a converter according to an embodiment of the present disclosure.
Fig. 5 is a block diagram of an exemplary configuration of a control apparatus for a converter according to an embodiment of the present disclosure.
Fig. 6 shows a block diagram of a computing device used in a method for determining optimal operating parameters of a converter or a method for controlling a converter according to an embodiment of the present disclosure.

In the figures, reference numerals are as follows:

| | | | |
|---|---|---|---|
| 100: | AC/DC-DC/DC converter | 102: | AC/DC part |
| 104: | DC/DC part | 200: | Method for determining optimal operating parameters of a converter |
| S202, S304, S204, S206, S208, S210, S302,S306, S308, S310: | Step | 300: | Method for controlling a converter |
| 400: | Apparatus for determining optimal operating parameters of a converter | 402: | Initial voltage setting unit |
| 404: | Power loss calculation unit | 406: | Repetitive control unit |
| 410: | Experience data storage unit | 500: | Control apparatus for a converter |
| 502: | Monitoring unit | 504: | First determination unit |
| 506: | Second determination unit | 508: | First control unit |
| 510: | Second control unit | 600: | Computing device |
| 602: | Processor | 604: | Memory |

### Detailed Description of the Embodiments

The subject matter described herein will now be discussed with reference to example embodiments. It should be understood that the discussion of these embodiments is only to enable those skilled in the art to better understand and implement the subject matter described herein, and is not a limitation of the scope of protection, applicability or examples set forth in the claims. The functions and arrangement of the elements discussed may be changed without departing from the scope of protection of the present disclosure. In various examples, various processes or components may be omitted, replaced or added as needed. For example, the described method may be performed in an order different from the described order, and various steps may be added, omitted or combined. In addition, the features described with respect to some examples may also be combined in other examples.

As used herein, the term "including" and its variations are open terms, meaning "including but not limited to". The term "based on" means "based at least in part on". The terms "one embodiment" and "an embodiment" mean "at least one embodiment". The term "another embodiment" means "at least one other embodiment". The terms "first", "second", etc. may refer to different or the same objects. Other definitions, whether explicit or implicit, may be included below. Unless the context clearly indicates otherwise, the definition of a term is consistent throughout the specification.

The present disclosure proposes a solution for AC/DC-DC/DC converters so that the optimal energy efficiency can be obtained. Through the above analysis, it can be seen that the main factors affecting energy efficiency include switching losses and conduction losses of the main switch components, transformer losses and line losses. For the same load current, reducing the switching frequency may reduce the switching losses of the main components. However, during the period when no energy is transmitted to the secondary side, the conduction losses of the switch components will increase due to the higher magnetic current, and the same is true for the transformer. Therefore, in the solution of the present disclosure, the optimal operating parameters of the converter are found from the perspective of the system level to obtain the optimal energy efficiency.

A method for determining optimal operating parameters of a converter and a method for controlling the converter according to an embodiment of the present disclosure will be described below with reference to the accompanying drawings.

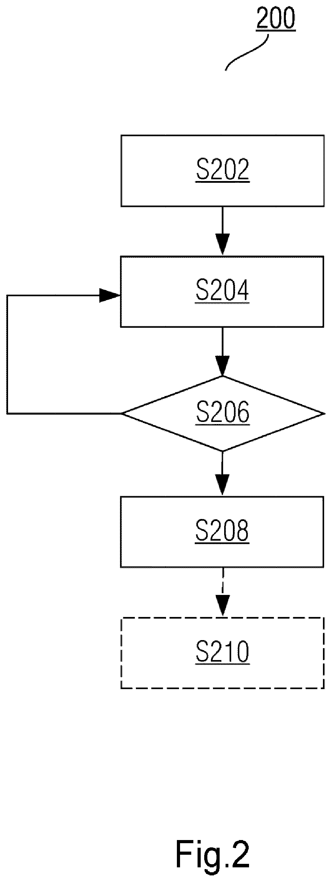

Fig. 2 is a flow chart of an exemplary process of a method 200 for determining optimal operating parameters of a converter according to an embodiment of the present disclosure.

The method according to the embodiment of the present disclosure is mainly directed to an AC/DC-DC/DC converter, i.e., a converter including an AC/DC conversion part and a DC/DC conversion part, wherein there is no limitation on the specific topological structures of the AC/DC and DC/DC parts.

It can be understood that the output voltage of the AC/DC module has a predetermined voltage range, and the output voltage of the DC/DC module is a DC voltage ultimately required by the converter, which is referred to as a predetermined DC output voltage. For the same AC/DC output voltage, to obtain a predetermined DC output voltage value, the gain can be changed by changing the switching frequency of the DC/DC module. The lower the switching frequency, the greater the gain. In this case, the switching loss is small and the conduction loss is large. The higher the switching frequency, the smaller the gain. In this case, the switching loss is large and the conduction loss is small.

The AC/DC output voltage is changed within the predetermined voltage range of the AC/DC output voltage, and the predetermined DC output voltage is achieved by changing the switching frequency of the DC/DC module. In this process, the operating parameters with the minimum power loss can be found, including the AC/DC output voltage and the switching frequency of the DC/DC module.

Specifically, in Fig. 2, firstly, in step S202, the AC/DC output voltage is set to a minimum value within the predetermined range.

In step S204, a power loss calculation operation is performed.

The power loss calculation operation specifically includes: causing the output voltage of the DC/DC module to reach the predetermined DC output voltage by changing the switching frequency of the DC/DC module;
calculating a power loss of the converter based on an input power of the AC/DC module and an output power of the DC/DC module; and
recording current operating parameters, the operating parameters including an AC/DC output voltage, a DC output current, DC output voltage and switching frequency of the DC/DC module, and a power loss.

When the system is controlled to be in a steady state, the input power of the AC/DC module may be calculated by measuring an input current and an input voltage of the AC/DC module. At the same time, the output power of the DC/DC module may be calculated by measuring an output current and an output voltage of the DC/DC module. An instantaneous power loss may be obtained by subtracting the output power from the input power.

In step S206, the AC/DC output voltage is increased, and step S204 is repeatedly performed until the AC/DC output voltage reaches a maximum value within the predetermined range.

For example, the AC/DC output voltage may be increased by a fixed increment each time, and the size of the increment may be set by a user according to accuracy requirements. For each increase in the AC/DC output voltage, the switching frequency is changed to reach the predetermined DC output voltage. Then, the power loss in this case is calculated, and the relevant operating parameters are recorded. When the AC/DC output voltage reaches the maximum value, the next step is executed.

During the operation of the converter, the DC output current (load current) generally remains unchanged, but in the case of different DC output currents, they will correspond to different AC/DC output voltages or different switching frequencies of the DC/DC modules. Therefore, the recorded operating parameters include the AC/DC output voltage, the DC output current, DC output voltage, and switching frequency of the DC/DC module, and the power losses.

In step S208, all recorded power losses are compared, and the AC/DC output voltage and switching frequency corresponding to the power loss with the minimum value are used as the optimal operating parameters under the condition of the predetermined DC output voltage.

Simply speaking, the AC/DC output voltage is adjusted within the voltage range of the AC/DC output voltage, and the switching frequency of the DC/DC module is adjusted accordingly, the power loss in each case is recorded, and finally the operating parameters corresponding to the minimum power loss are obtained as the optimal operating parameters.

When the DC output current is changed, steps S202-S208 may be repeatedly performed to determine the optimal operating parameters under the condition of the DC output current.

In addition, changes in ambient temperature may also affect the power loss, but this change is very slow and the impact is relatively small. In most cases, the impact of temperature can be ignored. Of course, the impact of temperature may also be considered. In this case, similar steps to the above may be used to determine the optimal operating parameters, which will not be described in detail here.

Preferably, the method 200 further includes step S210, storing, as empirical data, the AC/DC output voltage and the switching frequency, DC output voltage and DC output current of the DC/DC module corresponding to the power loss with the minimum value.

The stored empirical data may also be used as a reference for other converters, as will be explained below.

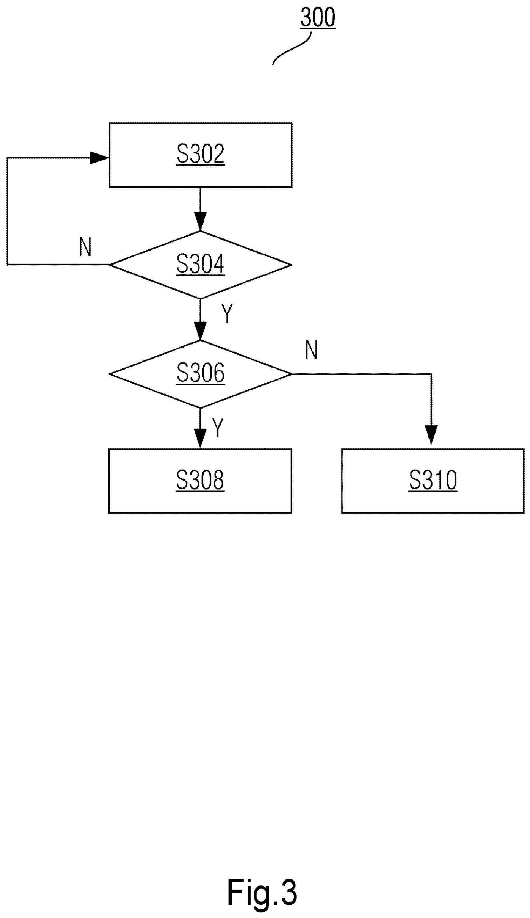

Fig. 3 is a flowchart of an exemplary process of a method 300 for controlling a converter according to an embodiment of the present disclosure.

In step S302, during the operation of the converter, the DC output voltage and DC output current of the DC/DC module of the converter are continuously monitored.

In step S304, it is determined whether the DC output voltage or the DC output current is changed.

If the DC output voltage or the DC output current is not changed (N), then the process goes back to step S302, and monitoring is continued without any other operations.

If one or both of the DC output voltage or the DC output current is changed (Y), step S306 is executed. In step S306, it is queried whether corresponding empirical data is stored for the current DC output voltage and DC output current. The empirical data includes the DC output voltage, the DC output current, the corresponding AC/DC output voltage of the AC/DC module, and the corresponding switching frequency of the DC/DC module.

Specifically, for example, a database may be stored in a main control chip of the converter, wherein the database includes empirical data for controlling the converter.

If there is the empirical data corresponding to the current DC output voltage and DC output current (Y), step S308 is performed, wherein the converter is controlled using the AC/DC output voltage and switching frequency in the empirical data.

If the corresponding empirical data is not stored (N), then step S310 is performed, wherein the AC/DC output voltage and switching frequency corresponding to the current DC output voltage and DC output current are determined using the method for determining the optimal operating parameters described above with reference to Fig. 2, and the converter is controlled using the determined AC/DC output voltage and switching frequency.

That is, in a case where there is no corresponding empirical data stored in the database, the optimal operating parameters will be determined according to the method described above with reference to Fig. 2. In addition, the new set of optimal operating parameters determined may also be stored as empirical data in the database, so that the empirical data stored in the database can be continuously updated.

After executing step S308 or S310, the method 300 may go back to step S302, that is, continuously monitoring the DC output voltage or DC output current of the converter to ensure that the operation of the converter can be controlled with the optimal operating parameters in real time, thereby causing the converter to have the optimal energy efficiency.

Multiple AC/DC-DC/DC converters may be grouped into a network, and converters in a group may share empirical data with each other; or multiple AC/DC-DC/DC converters are connected to the Internet or a communication network (4G/5G), and a central control unit is connected to the network, wherein the central control unit may store multiple sets of empirical data, and the converter may obtain empirical data from the central control unit through the network to perform parameter control. In the present disclosure, this is not described in detail again.

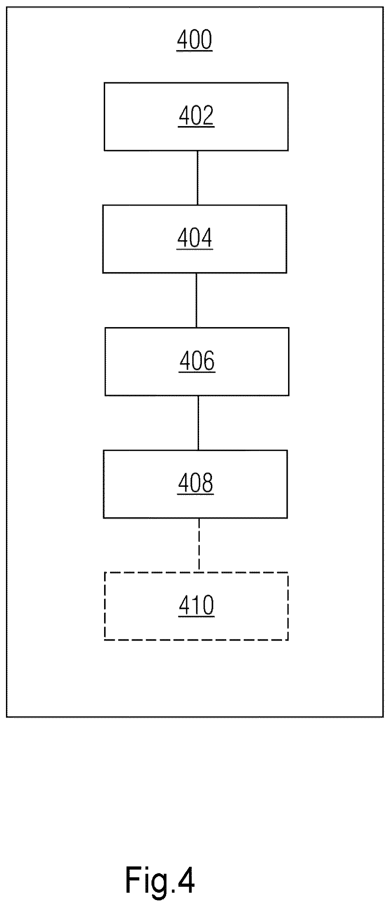

Fig. 4 is a block diagram of an exemplary configuration of an apparatus 400 for performing the method for determining the optimal operating parameters of the converter shown in Fig. 2.

In Fig. 4, the apparatus 400 for determining the optimal operating parameters of the converter includes: an initial voltage setting unit 402, a power loss calculation unit 404, a repetitive control unit 406, and an optimal parameter determination unit 408.

Here, the converter includes an AC/DC module and a DC/DC module, and an AC/DC output voltage of the AC/DC module has a predetermined range.

The initial voltage setting unit 402 is configured to set the AC/DC output voltage to a minimum value within the predetermined range.

The power loss calculation unit 404 is configured to perform the following power loss calculation operations:
causing an output voltage of the DC/DC module to reach a predetermined DC output voltage by changing a switching frequency of the DC/DC module;
calculating a power loss of the converter based on an input power of the AC/DC module and an output power of the DC/DC module;
recording current operating parameters, the operating parameters including an AC/DC output voltage, a DC output current, DC output voltage and switching frequency of the DC/DC module, and a power loss.

The repetitive control unit 406 is configured to increase the AC/DC output voltage and control the power loss calculation unit 404 to perform the operation until the AC/DC output voltage reaches a maximum value within the predetermined range.

The optimal parameter determination unit 408 is configured to compare all recorded power losses, and to use the AC/DC output voltage and switching frequency corresponding to the power loss with a minimum value as the optimal operating parameters under the condition of the predetermined DC output voltage.

Preferably, the apparatus 400 further includes an empirical data storage unit 410 configured to store, as empirical data, the AC/DC output voltage, and the switching frequency, DC output voltage and DC output current of the DC/DC module corresponding to the power loss with the minimum value.

The power loss calculation unit 404 is further configured to:
measure an input current and an input voltage of the AC/DC module to calculate the input power of the AC/DC module;
measure an output current and an output voltage of the DC/DC module to calculate the output power of the DC/DC module; and
obtain the power loss by subtracting the output power from the input power.

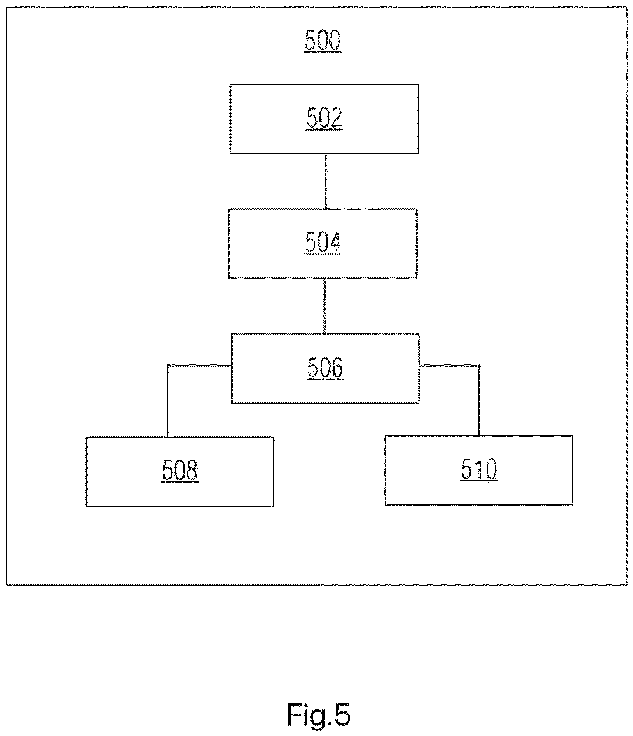

Fig. 5 is a block diagram of an exemplary configuration of a control apparatus 500 for performing the control method for the converter shown in Fig. 3.

In Fig. 5, the control apparatus 500 includes a monitoring unit 502, a first determination unit 504, a second determination unit 506, a first control unit 508 and a second control unit 510.

The monitoring unit 502 is configured to monitor the DC output voltage and DC output current of the DC/DC module of the converter.

The first determination unit 504 is configured to determine whether the DC output voltage or the DC output current is changed.

The second determination unit 506 is configured to, in a case where the DC output voltage or DC output current is changed, query whether corresponding empirical data is stored for the current DC output voltage and DC output current, wherein the empirical data includes the DC output voltage, the DC output current, the corresponding AC/DC output voltage of the AC/DC module, and the corresponding switching frequency of the DC/DC module.

In a case where the corresponding empirical data is stored, the first control unit 508 is configured to control the converter using the AC/DC output voltage and switching frequency in the empirical data.

In a case where the corresponding empirical data is not stored, the second control unit 510 is configured to determine the AC/DC output voltage and switching frequency corresponding to the current DC output voltage and DC output current using the method 200 for determining the optimal operating parameters of the converter described above with reference to Fig. 2, and to control the converter using the determined AC/DC output voltage and switching frequency.

It should be noted that the structures of the apparatus for determining the optimal operating parameters of the converter shown in Fig. 4, and the control apparatus for the converter and its constituent units shown in Fig. 5 are merely exemplary, and those skilled in the art may modify the structural block diagrams shown in Figs. 4 and 5 as needed.

The details of the operations and functions of the various parts of the apparatus 400 for determining the optimal operating parameters of the converter and the control apparatus 500 of the converter may be the same as or similar to the relevant parts of the embodiments of the method for determining the optimal operating parameters of the converter and the control method for the converter of the present disclosure described in conjunction with Figs. 1-3, and will not be described in detail again here.

According to the method for determining the optimal operating parameters of the converter and the control method for the converter of the present disclosure, the optimal operating parameters of the converter are found, and the converter is controlled to operate according to the optimal operating parameters, so that the optimal energy efficiency of the converter can be achieved. In addition, in the method of the present disclosure, the optimal operating parameters found each time are stored in the database as empirical data, thereby making it possible to dynamically update the database, so that other converters can directly use the empirical data in the database through the network without the need for an additional search process. The method according to the present disclosure is simple and easy to implement without the need for any change of the hardware.

As described above with reference to Figs. 1 to 5, the method for determining the optimal operating parameters of the converter, and the control method and apparatus for the converter according to the embodiments of the present disclosure, have been described. Each unit of the apparatus as described above may be implemented by hardware, or by software, or by a combination of hardware and software.

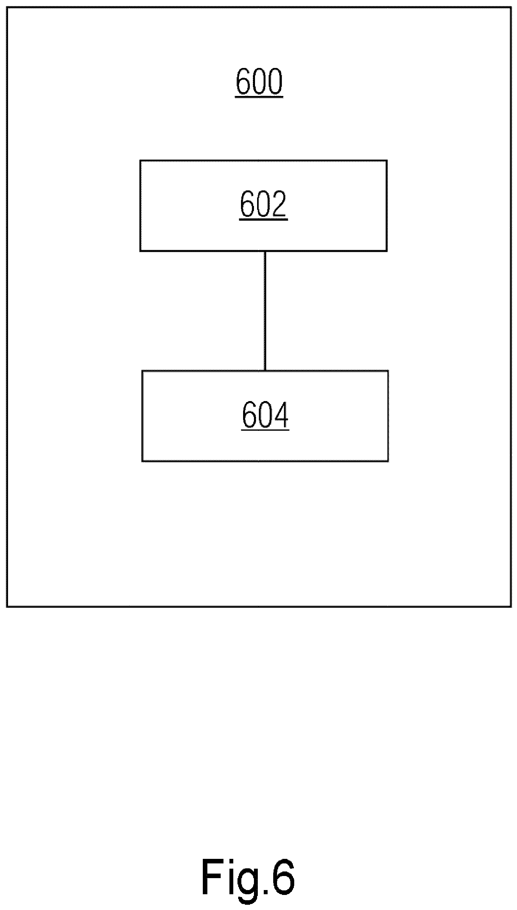

Fig. 6 shows a block diagram of a computing device 600 used in a method for determining optimal operating parameters of a converter or a method for controlling a converter according to an embodiment of the present disclosure. According to one embodiment, the computing device 600 may include at least one processor 602, and the processor 602 executes at least one computer-readable instruction (i.e., the above-mentioned element implemented in the form of software) stored or encoded in a computer-readable storage medium (i.e., a memory 604).

In one embodiment, computer-executable instructions are stored in the memory 604, and the computer-executable instructions, when executed, enable the at least one processor 602 to complete the operations performed by the control apparatus.

It should be understood that the computer-executable instructions stored in the memory 604, when executed, cause the at least one processor 602 to perform various operations and functions described above in conjunction with Figs. 1-5 in various embodiments of the present disclosure.

According to one embodiment, a non-transitory machine-readable medium is provided. The non-transitory machine-readable medium may have machine-executable instructions (i.e., the above-mentioned elements implemented in the form of software), which, when executed by a machine, cause the machine to perform various operations and functions described above in conjunction with Figs. 1-5 in various embodiments of the present disclosure.

According to one embodiment, a computer program is provided, including computer-executable instructions, which, when executed, cause at least one processor to perform various operations and functions described above in conjunction with Figs. 1-5 in various embodiments of the present disclosure.

According to one embodiment, a computer program product is provided, including computer-executable instructions, which, when executed, cause at least one processor to perform various operations and functions described above in conjunction with Figs. 1-5 in various embodiments of the present disclosure.

The specific embodiments described above in conjunction with the accompanying drawings have described exemplary embodiments, but do not represent all embodiments that can be implemented or fall within the scope of protection of the claims. The term "exemplary" used throughout this specification means "used as an example, instance, or illustration" and does not mean "preferred" or "having advantages" over other embodiments. For the purpose of providing an understanding of the described technology, the specific embodiments include specific details. However, these technologies can be implemented without these specific details. In some instances, in order to avoid making the concepts of the described embodiments difficult to understand, well-known structures and apparatuses are shown in the form of block diagrams.

The above description of the contents of the present disclosure is provided to enable any person of ordinary skill in the art to implement or use the contents of the present disclosure. Various modifications to the contents of the present disclosure will be apparent to those of ordinary skill in the art, and the general principles defined herein may be applied to other variations without departing from the scope of protection of the contents of the present disclosure. Therefore, the contents of the present disclosure are not limited to the examples and designs described herein, but are consistent with the widest range of principles and novel features disclosed herein.

The foregoing descriptions are only preferred embodiments of the present invention and are not intended to limit the present invention. Any modifications, equivalent replacements, and improvements made without departing from the spirit and principle of the present invention shall fall within the scope of protection of the present invention.

## Claims

1. A method (200) for determining optimal operating parameters of a converter, wherein the converter comprises an AC/DC module and a DC/DC module, and an AC/DC output voltage of the AC/DC module has a predetermined range, the method (200) comprising:
setting the AC/DC output voltage to a minimum value within the predetermined range (S202);
performing a power loss calculation operation (S204), the power loss calculation operation (S204) comprising:
causing an output voltage of the DC/DC module to reach a predetermined DC output voltage by changing a switching frequency of the DC/DC module;
calculating a power loss of the converter based on an input power of the AC/DC module and an output power of the DC/DC module;
recording current operating parameters, the operating parameters comprising an AC/DC output voltage, a DC output current, DC output voltage and switching frequency of the DC/DC module, and a power loss;
increasing the AC/DC output voltage and repeatedly performing the power loss calculation operation until the AC/DC output voltage reaches a maximum value within the predetermined range (S206); and
comparing all recorded power losses, and using the AC/DC output voltage and the switching frequency corresponding to the power loss with a minimum value as the optimal operating parameters under the condition of the predetermined DC output voltage (S208).

2. The method according to claim 2, further comprising: storing, as empirical data, the AC/DC output voltage, and the switching frequency, DC output voltage and DC output current of the DC/DC module corresponding to the power loss with the minimum value (S210).

3. The method according to claim 1 or 2, wherein calculating the power loss of the converter based on the input power of the AC/DC module and the output power of the DC/DC module comprises:
measuring an input current and an input voltage of the AC/DC module to calculate the input power of the AC/DC module;
measuring an output current and an output voltage of the DC/DC module to calculate the output power of the DC/DC module; and
obtaining the power loss by subtracting the output power from the input power.

4. A method (300) for controlling a converter, wherein the converter comprises an AC/DC module and a DC/DC module, the method comprising:
monitoring (S302) a DC output voltage and a DC output current of the DC/DC module of the converter;
determining (S304) whether the DC output voltage or the DC output current is changed; if not, going back to the previous step (S302), and if so, executing the next step (S306);
querying (S306) whether corresponding empirical data is stored for the current DC output voltage and DC output current, wherein the empirical data comprises the DC output voltage, the DC output current, the corresponding AC/DC output voltage of the AC/DC module, and the corresponding switching frequency of the DC/DC module;
if the corresponding empirical data is stored, controlling the converter by using the AC/DC output voltage and switching frequency in the empirical data (S308);
if the corresponding empirical data is not stored, determining an AC/DC output voltage and a switching frequency corresponding to the current DC output voltage and DC output current by using the method described in any one of claims 1-3, and controlling the converter by using the determined AC/DC output voltage and switching frequency (S310).

5. An apparatus (400) for determining optimal operating parameters of a converter, wherein the converter comprises an AC/DC module and a DC/DC module, and an AC/DC output voltage of the AC/DC module has a predetermined range, the apparatus (400) comprising:
an initial voltage setting unit (402), configured to set the AC/DC output voltage to a minimum value within the predetermined range;
a power loss calculation unit (404), configured to perform the following power loss calculation operations:
causing an output voltage of the DC/DC module to reach a predetermined DC output voltage by changing a switching frequency of the DC/DC module;
calculating a power loss of the converter based on an input power of the AC/DC module and an output power of the DC/DC module; and
recording current operating parameters, the operating parameters comprising an AC/DC output voltage, an output current and a switching frequency of the DC/DC module, and a power loss;
a repetitive control unit (406), configured to increase the AC/DC output voltage and to control the power loss calculation unit to perform the operation until the AC/DC output voltage reaches a maximum value within the predetermined range; and
an optimal parameter determination unit (48), configured to compare all recorded power losses, and to use the AC/DC output voltage and switching frequency corresponding to the power loss with a minimum value as the optimal operating parameters under the condition of the predetermined DC output voltage.

6. The apparatus according to claim 5, further comprising an empirical data storage unit (410), configured to store, as empirical data, the AC/DC output voltage, and the switching frequency, DC output voltage and DC output current of the DC/DC module corresponding to the power loss with the minimum value.

7. The apparatus according to claim 5 or 6, wherein the power loss calculation unit (404) is further configured to:
measure an input current and an input voltage of the AC/DC module to calculate the input power of the AC/DC module;
measure an output current and an output voltage of the DC/DC module to calculate the output power of the DC/DC module; and
obtain the power loss by subtracting the output power from the input power.

8. A control apparatus (500) for a converter, wherein the converter comprises an AC/DC module and a DC/DC module, the control apparatus comprising:
a monitoring unit (502), configured to monitor a DC output voltage and a DC output current of the DC/DC module of the converter;
a first determination unit (504), configured to determine whether the DC output voltage or the DC output current is changed;
a second determination unit (506), configured to, in a case where the DC output voltage or DC output current is changed, query whether corresponding empirical data is stored for the current DC output voltage and DC output current, wherein the empirical data includes the DC output voltage, the DC output current, the corresponding AC/DC output voltage of the AC/DC module, and the corresponding switching frequency of the DC/DC module;
a first control unit (508), configured to, in a case where the corresponding empirical data is stored, control the converter using the AC/DC output voltage and switching frequency in the empirical data;
a second control unit (510), configured to, in a case where the corresponding empirical data is not stored, determine an AC/DC output voltage and a switching frequency corresponding to the current DC output voltage and DC output current by using the method according to any one of claims 1-3, and control the converter by using the determined AC/DC output voltage and switching frequency.

9. A computing device (600), comprising:
at least one processor (602); and
a memory (604) coupled to the at least one processor (602), wherein the memory is used to store instructions, which, when executed by the at least one processor (602), cause the processor (602) to perform the method according to any one of claims 1-3 and 4.

10. A non-transitory machine-readable storage medium, storing executable instructions, which, when executed, cause the machine to perform the method according to any one of claims 1-3 and 4.

11. A computer program product, the computer program product being tangibly stored on a computer-readable medium and comprising computer-executable instructions, which, when executed, cause at least one processor to perform the method according to any one of claims 1-3 and 4.
